# EUROPÄISCHE PATENTSCHRIFT

(11) **EP 3 560 883 B1**
(45) Veröffentlichungstag und Bekanntmachung des Hinweises auf die Patenterteilung: **29.09.2021**
(21) Anmeldenummer: 19165882.2
(22) Anmeldetag: 28.03.2019
(51) Int. Cl.: B66C 23/36, B66C 23/00

(54) **FAHRZEUG**
VEHICLE
VÉHICULE

(30) Priorität: 26.04.2018 AT 5007818 U
(43) Veröffentlichungstag der Anmeldung: 30.10.2019
(73) Patentinhaber: FMG Fahrzeugbau - Maschinenbau GmbH, 8632 Gusswerk (AT)
(72) Erfinder: Goldgruber, Martin, 8632 Greith (AT); Schenner, Martin, 3223 Wienerbruck (AT)
(74) Vertreter: Wirnsberger & Lerchbaum Patentanwälte OG

(56) Entgegenhaltungen:
- EP-A2- 1 607 363
- WO-A1-2016/043636
- DE-A1- 4 311 662
- DE-A1- 19 736 109

## Beschreibung

Die Erfindung betrifft ein Fahrzeug mit einem Tragrahmen und einem Kran, welcher zumindest einen Kranarm und eine Kransäule aufweist, wobei der Kranarm um eine Schwenkachse schwenkbar mit der Kransäule verbunden ist.

Aus dem Stand der Technik sind verschiedene Fahrzeuge der eingangs genannten Art bekannt geworden. Die Dokumente EP 1607363 und WO 2016043636 offenbaren ein solches Fahrzeug mit einem darauf montierten Kran. Das Dokument EP 1607363 offenbart die Präambel von Anspruch 1.

Bei derartigen Fahrzeugen ist der Kran über ein Stativ bzw. eine kraneigene Abstützung mit dem Fahrzeug verbunden. Nachteilig bei dieser Ausführung ist, dass Fahreigenschaften des Fahrzeuges, insbesondere die Fahrdynamik, ungünstig sind. Weiter können bei derartigen Fahrzeugen des Standes der Technik nur kleinere Kräne aufgebaut werden, sodass Einsatzmöglichkeiten derartiger Fahrzeuge sehr beschränkt sind.

Hier setzt die Erfindung an. Aufgabe der Erfindung ist es, ein Fahrzeug der eingangs genannten Art anzugeben, welches ein besonders vorteilhaftes Fahrverhalten und bessere Einsatzmöglichkeiten aufweist.

Diese Aufgabe wird erfindungsgemäß durch ein Fahrzeug der eingangs genannten Art gelöst, bei welchem die Kransäule mit einer Flanschplatte verbunden ist, welche auf den Tragrahmen aufgeschweißt ist.

Im Rahmen der Erfindung wurde erkannt, dass durch den Einsatz einer Flanschverbindung zwischen Kran und Fahrzeug ein niedrigerer Schwerpunkt erreicht werden kann, welcher zu günstigeren Fahreigenschaften des Fahrzeuges führt. Aufgrund der reduzierten Bauhöhe eines Flansches gegenüber einem Stativ bzw. einer kraneigenen Abstützung kann darüber hinaus ein größerer Kran eingesetzt werden, sodass mehr Einsatzmöglichkeiten gegeben sind. Eine Schweißverbindung zwischen dem Tragrahmen und der Flanschverbindung gewährleistet, dass auftretende Kräfte zuverlässig und ohne Relativbewegungen zwischen Kran und Tragrahmen übertragen werden können.

Günstig ist es, wenn am Tragrahmen eine Abstützung angeordnet ist, welche absenkbare Stützbeine aufweist, wobei vorzugsweise vier absenkbare Stützbeine vorgesehen sind.

Dadurch wird eine hohe Stabilität bei einem Betrieb eines Kranes erreicht. Üblicherweise weist die Abstützung in den Tragrahmen integrierte Ausschubteile auf, an welchen die Stützbeine relativ zum Tragrahmen ausschiebbar und absenkbar angeordnet sind.

Bevorzugt ist vorgesehen, dass die Stützbeine mit Ausschubzylindern ausfahrbar mit dem Tragrahmen verbunden sind. Dadurch kann ein seitlicher Abstand der Stützbeine vom Kran erhöht werden, um beispielsweise Querkräfte besonders gut aufnehmen zu können.

Es hat sich gezeigt, dass eine besonders stabile Positionierung des Kranes für einen Betrieb dann erreicht wird, wenn die Stützbeine unter einem Winkel zu einer Längsachse des Fahrzeuges ausfahrbar sind, wobei der Winkel bei vorderen Stützbeinen 20° bis 80°, insbesondere 30° bis 50°, und bei hinteren Stützbeinen 105° bis 170°, insbesondere 110° bis 130°, beträgt.

Um eine hohe Flexibilität in Bezug auf mögliche Einsatzbereiche des Fahrzeuges zu erreichen, ist es günstig, wenn der Kran relativ zum Tragrahmen um 360° um eine vertikale Achse schwenkbar ist.

Kräfte des Kranes können besonders zuverlässig an einen Untergrund übertragen werden, wenn der Tragrahmen in einem Bereich eines Aufbauraumes mit dem Fahrzeug verbunden ist.

Zur robusten Übertragung von Quer- und Längskräften ist es günstig, wenn zur Verbindung des Tragrahmens mit dem Fahrzeug Schublaschen in einem hinteren Bereich vorgesehen sind, durch welche der Tragrahmen formschlüssig mit dem Fahrzeug verbunden ist.

Um das Fahrzeug besonders vielseitig einsetzen zu können, ist es vorteilhaft, wenn das Fahrzeug ein zweiachsiges Fahrzeug ist. Das Fahrzeug kann dann beispielsweise für Forstarbeiten auch in unwegsamem Gelände eingesetzt werden. Üblicherweise wird als Fahrzeug ein sogenannter Unimog eingesetzt.

Eine besonders vorteilhafte Geländegängigkeit des Fahrzeuges wird erreicht, wenn das Fahrzeug einen Leiterrahmen aufweist, der sich auf an Schubrohren und Querlenkern geführte Portalachsen stützt, die mit Schraubenfedern abgefedert sind.

Mit Vorteil ist der Tragrahmen mit dem Leiterrahmen des Fahrzeuges verbunden, um auftretende Kräfte auf zuverlässige und gleichzeitig robuste Weise an einem Untergrund abzuleiten.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine Seitenansicht eines erfindungsgemäßen Fahrzeuges;
Fig. 2 ein erfindungsgemäßes Fahrzeug in einer Draufsicht;
Fig. 3 eine Draufsicht auf das erfindungsgemäße Fahrzeug in einem weiteren Betriebszustand.

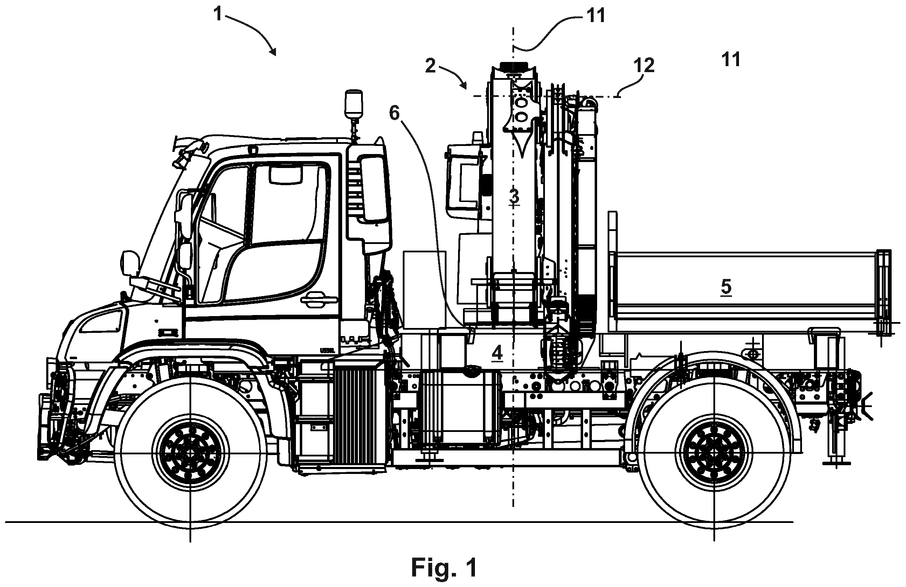

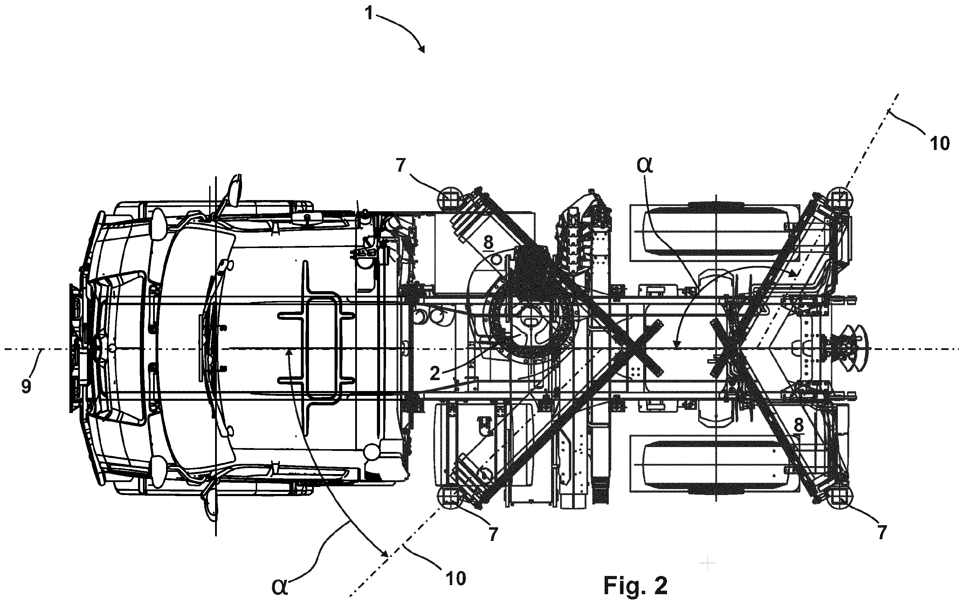

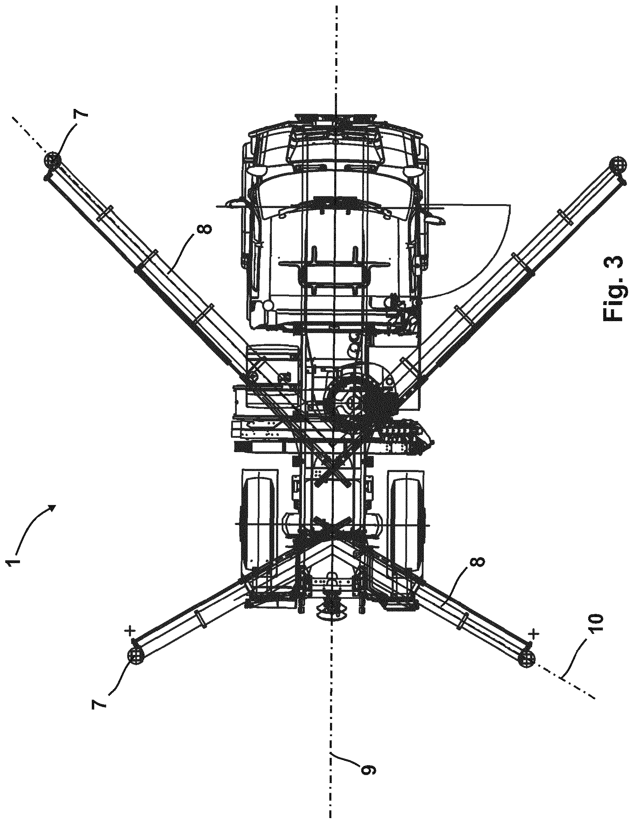

Fig. 1 bis 3 zeigen ein erfindungsgemäßes Fahrzeug 1, wobei Fig. 1 das Fahrzeug 1 in einer Seitenansicht und Fig. 2 und 3 das Fahrzeug 1 in einer Draufsicht zeigen. In dem in Fig. 3 dargestellten Betriebszustand sind Stützbeine 7 des Tragrahmens 4 in einer ausgefahrenen Arbeitsposition dargestellt, um auch Querkräfte und Momente, welche bei Benutzung des Kranes 2 auf den Tragrahmen 4 wirken, gut an einen Untergrund ableiten und so das Fahrzeug 1 stabil in Position halten zu können.

Wie ersichtlich sind die mittels Ausschubzylindern 8 ausfahrbar am Tragrahmen 4 angeordneten Stützbeine 7 unter einem Winkel α zu einer Längsachse 9 des Fahrzeuges 1 angeordnet. Dadurch wird eine besonders hohe Stabilität erreicht. Wie dargestellt beträgt der Winkel α zwischen einer Zylinderachse 10 der vorderen Stützbeine 7 und der Längsachse 9 etwa 30° bis 50° und zwischen einer Zylinderachse 10 der hinteren Stützbeine 7 und der Längsachse 9 etwa 110° bis 130°.

Erfindungsgemäß ist der Kran 2, welcher einen über eine Schwenkachse 12 drehbar mit einer Kransäule 3 verbundenen Kranarm aufweist, über eine Flanschverbindung direkt mit dem Tragrahmen 4 verbunden. Hierzu ist am Tragrahmen 4 eine Flanschplatte 6 aufgeschweißt, mit welcher der Kran 2 an der Kransäule verbunden ist. Im Unterschied zu Fahrzeugen 1 des Standes der Technik ist somit kein Stativ und keine kraneigene Abstützung erforderlich, wodurch ein niedriger Schwerpunkt des Fahrzeuges 1, und somit eine vorteilhafte Fahrzeugdynamik sowie ein größerer Kran 2 ermöglicht sind. Der Kran 2 ist um eine vertikale Achse 11 um 360° schwenkbar, sodass dieser für verschiedenste Zwecke einsetzbar ist.

Wie dargestellt ist hinter dem Kran 2 eine Ladefläche 5 auf dem Tragrahmen 4 angeordnet, sodass mit dem Kran 2 aufgenommene Gegenstände auf der Ladefläche 5 abgelegt und mit dem Fahrzeug 1 transportiert werden können.

Mit einem erfindungsgemäßen Fahrzeug 1 wird eine besonders günstige Fahrdynamik bei gleichzeitig verbesserten Verwendungsmöglichkeiten erreicht, zumal verglichen mit Fahrzeugen 1 des Standes der Technik größere Kräne eingesetzt werden können und das Fahrzeug 1 einen tieferen Schwerpunkt sowie eine niedrigere Bauhöhe als Fahrzeuge 1 des Standes der Technik aufweist. Ein solches, üblicherweise mit einem Leiterrahmen, der sich auf an Schubrohren und Querlenkern geführte Portalachsen stützt, ausgebildetes Fahrzeug 1 ist besonders robust und auch in unwegsamem Gelände einsetzbar und kann beispielsweise für Forstarbeiten vorteilhaft eingesetzt werden.

## Patentansprüche

1. Fahrzeug (1) mit einem Tragrahmen (4) und einem Kran (2), welcher zumindest einen Kranarm und eine Kransäule (3) aufweist, wobei der Kranarm um eine Schwenkachse (12) schwenkbar mit der Kransäule (3) verbunden ist, wobei die Kransäule (3) mit einer Flanschplatte (6) verbunden ist, **dadurch gekennzeichnet, dass** die Flanschplatte (6) auf den Tragrahmen (4) aufgeschweißt ist.

2. Fahrzeug (1) nach Anspruch 1, **dadurch gekennzeichnet, dass** am Tragrahmen (4) eine Abstützung angeordnet ist, welche absenkbare Stützbeine (7) aufweist, wobei vorzugsweise vier absenkbare Stützbeine (7) vorgesehen sind.

3. Fahrzeug (1) nach Anspruch 2, **dadurch gekennzeichnet, dass** die Stützbeine (7) mit Ausschubzylindern (8) ausfahrbar mit dem Tragrahmen (4) verbunden sind.

4. Fahrzeug (1) nach einem der Ansprüche 1 bis 3, **dadurch gekennzeichnet, dass** die Stützbeine (7) unter einem Winkel (α) zu einer Längsachse (9) des Fahrzeuges (1) ausfahrbar sind, wobei der Winkel (α) bei vorderen Stützbeinen (7) 20° bis 80°, insbesondere 30° bis 50°, und bei hinteren Stützbeinen (7) 105° bis 170°, insbesondere 110° bis 130°, beträgt.

5. Fahrzeug (1) nach einem der Ansprüche 1 bis 4, **dadurch gekennzeichnet, dass** der Kran (2) relativ zum Tragrahmen (4) um 360° um eine vertikale Achse (11) schwenkbar ist.

6. Fahrzeug (1) nach einem der Ansprüche 1 bis 5, **dadurch gekennzeichnet, dass** der Tragrahmen (4) in einem Bereich eines Aufbauraumes mit dem Fahrzeug (1) verbunden ist.

7. Fahrzeug (1) nach einem der Ansprüche 1 bis 6, **dadurch gekennzeichnet, dass** zur Verbindung des Tragrahmens (4) mit dem Fahrzeug (1) Schublaschen in einem hinteren Bereich vorgesehen sind, durch welche der Tragrahmen (4) formschlüssig mit dem Fahrzeug (1) verbunden ist.

8. Fahrzeug (1) nach einem der Ansprüche 1 bis 7, **dadurch gekennzeichnet, dass** das Fahrzeug (1) ein zweiachsiges Fahrzeug (1) ist.

9. Fahrzeug (1) nach einem der Ansprüche 1 bis 8, **dadurch gekennzeichnet, dass** das Fahrzeug (1) einen Leiterrahmen aufweist, der sich auf an Schubrohren und Querlenkern geführte Portalachsen stützt, die mit Schraubenfedern abgefedert sind.

10. Fahrzeug (1) nach Anspruch 9, **dadurch gekennzeichnet, dass** der Tragrahmen (4) mit dem Leiterrahmen des Fahrzeuges (1) verbunden ist.

## Claims

1. Vehicle (1) with a support frame (4) and a crane (2), which has at least one crane arm and one crane pillar (3), wherein the crane arm is connected to the crane pillar (3) such that it can pivot about a pivot axis (12), wherein the crane pillar (3) is connected to a flange plate (6), **characterized in that** the flange plate (6) is welded to the support frame (4).

2. Vehicle (1) according to claim 1, **characterized in that** a support is arranged on the support frame (4), which has height adjustable support legs (7), wherein four height adjustable support legs (7) are preferably provided.

3. Vehicle (1) according to claim 2, **characterized in that** the support legs (7) are connected to the support frame (4) by means of retractable cylinders (8) such that the support legs (7) are extendable.

4. Vehicle (1) according to any one of claims 1 to 3, **characterized in that** the support legs (7) are extendable at an angle (α) to a longitudinal axis (9) of the vehicle (1), wherein the angle (α) is 20° to 80° at the front support legs (7), in particular 30° to 50°, and is 105° to 170° at the rear support legs (7), in particular 110° to 130°.

5. Vehicle (1) according to any one of claims 1 to 4, **characterized in that** the crane (2) is able to pivot by 360° about a vertical axis (11) relative to the support frame (4).

6. Vehicle (1) according to any one of claims 1 to 5, **characterized in that** the support frame (4) is connected to the vehicle (1) in a region of a superstructure.

7. Vehicle (1) according to any one of claims 1 to 6, **characterized in that** sliding tabs are provided in a rear region for connecting the support frame (4) to the vehicle (1), by means of which sliding tabs the support frame (4) is connected to the vehicle (1) in a positivelocking manner.

8. Vehicle (1) according to any one of claims 1 to 7, **characterized in that** the vehicle (1) is a two-axle vehicle (1).

9. Vehicle (1) according to any one of claims 1 to 8, **characterized in that** the vehicle (1) has a ladder frame supported by portal axles guided on torque tubes and control arms, which portal axles are suspended by means of helical springs.

10. Vehicle (1) according to claim 9, **characterized in that** the support frame (4) is connected to the ladder frame of the vehicle (1).

## Revendications

1. Véhicule (1) comportant un châssis de support (4) et une grue (2) qui présente au moins un bras de grue et une colonne de grue (3), dans lequel le bras de grue est relié de manière pivotante à la colonne de grue (3) autour d'un axe de pivotement (12), dans lequel la colonne de grue (3) est reliée à une plaque à bride (6), **caractérisé en ce que** la plaque à bride (6) est soudée sur le châssis de support (4).

2. Véhicule (1) selon la revendication 1, **caractérisé en ce que** sur le châssis de support (4), un support est agencé, qui a des pieds de support abaissables (7), dans lequel de préférence quatre pieds de support abaissables (7) sont prévus.

3. Véhicule (1) selon la revendication 2, **caractérisé en ce que** les pieds de support (7) sont reliés à des vérins d'extension (8) de manière à pouvoir être déployés avec le châssis de support (4).

4. Véhicule (1) selon une des revendications 1 à 3, **caractérisé en ce que** les pieds de support (7) peuvent être déployés selon un angle (α) par rapport à un axe longitudinal (9) du véhicule (1), dans lequel l'angle (α) au niveau des pieds d'appui avant (7) est compris entre 20° et 80°, notamment entre 30° et 50°, et dans le cas des pieds d'appui arrière (7) entre 105° et 170°, notamment 110° et 130°.

5. Véhicule (1) selon une des revendications 1 à 4, **caractérisé en ce que** la grue (2) est pivotante par rapport au châssis de support (4) de 360° autour d'un axe vertical (11).

6. Véhicule (1) selon une des revendications 1 à 5, **caractérisé en ce que** le châssis de support (4) est relié au véhicule (1) dans une zone d'un espace de construction.

7. Véhicule (1) selon une des revendications 1 à 6, **caractérisé en ce que** pour relier le châssis de support (4) au véhicule (1) des tiroirs sont prévus dans une zone arrière, par l'intermédiaire desquels le châssis de support (4) est relié par conjonction de forme au véhicule (1).

8. Véhicule (1) selon une des revendications 1 à 7, **caractérisé en ce que** le véhicule (1) est un véhicule à deux essieux (1).

9. Véhicule (1) selon une des revendications 1 à 8, **caractérisé en ce que**, le véhicule (1) présente un châssis en échelle qui repose sur des tubes et des essieux en portique guidés par des bras transversaux et amortis par des ressorts hélicoïdaux.

10. Véhicule (1) selon la revendication 9, **caractérisé en ce que** le châssis de support (4) est relié au châssis en échelle du véhicule (1).
